# EUROPEAN PATENT SPECIFICATION

(11) **EP 2 442 936 B1**
(45) Date of publication and mention of the grant of the patent: **09.09.2015**
(21) Application number: 10743213.0
(22) Date of filing: 14.06.2010
(51) Int. Cl.: B23D 55/10, B23D 57/00, B28D 1/08

(54) **SAWING MACHINE FOR SAWING A MATERIAL IN BLOCK FORM WITH A DEVICE FOR TENSIONING A FLEXIBLE TOOL WOUND ON PULLEYS**
SÄGEMASCHINE ZUM SÄGEN VON MATERIAL IN BLOCKFORM MIT EINER VORRICHTUNG ZUR SPANNUNG EINES AUF ROLLEN GEWICKELTEN BIEGSAMEN INSTRUMENTS
DISPOSITIF POUR METTRE SOUS TENSION UN OUTIL SOUPLE ENROULÉ SUR DES POULIES DANS UNE MACHINE À SCIER DE MATÉRIAU EN FORME DE BLOC

(30) Priority: 15.06.2009 IT TO20090086 U; 15.06.2009 IT TO20090456; 21.10.2009 IT TO20090800
(43) Date of publication of application: 25.04.2012
(73) Proprietor: CO.FI.PLAST. S.r.l., 10010 Lessolo (Torino) (IT)
(72) Inventor: BROCCO, Emilio, I-10010 Lessolo (Torino) (IT)
(74) Representative: Aprà, Mario
(86) International application number: PCT/IB2010/001424
(87) International publication number: WO 2010/146434

(56) References cited:
- EP-A1- 1 024 314
- WO-A1-2007/036784
- WO-A2-2008/146234
- ES-A1- 2 339 314
- GB-A- 1 279 752

## Description

The present invention relates to a sawing machine according to the preamble of claim 1 and to a multiwire sawing machine according to the preamble of claim 10. Such a sawing machine is known from WO 2008/14623A2 and such a multi-wire machine is known from WO 2007/036784 A1.

Sawing machine for material in block form are known, in particular for stony material, having a plurality of cutting tools consisting of diamond wires, wound as a closed loop on corresponding rollers, or "packets" of wheels or control and return pulleys. Such sawing machines are called "multi-wire". The patent for utility model no. IT 236,075, filed on 26.06.1997 by the inventor of the present invention, describes a sawing machine of the specified type, wherein a plurality of diamond wires (hereinafter called "cutting wires") are wound as a closed loop and each made to circulate between a respective driving pulley and at least one respective driven pulley and wherein each cutting wire is arranged in a respective plane, for example vertical, substantially parallel to the planes wherein the other cutting wires lie. The reciprocal distance between adjacent cutting wires and thus, the thickness of the slabs cut by the same wires is thus determined.

Conventionally, before starting the cutting operation, all cutting wires are subject to a simultaneous tensioning by tensioning means that move a shaft carrying driven pulleys, whereon the same wires are partially wound and returned, in a suitable direction.

However, the above tensioning means act to the same extent on all cutting wires wound as a closed loop on the pulleys, without keeping into account any differences between one cutting wire and the other, in the respective individual shape and closed loop configuration.

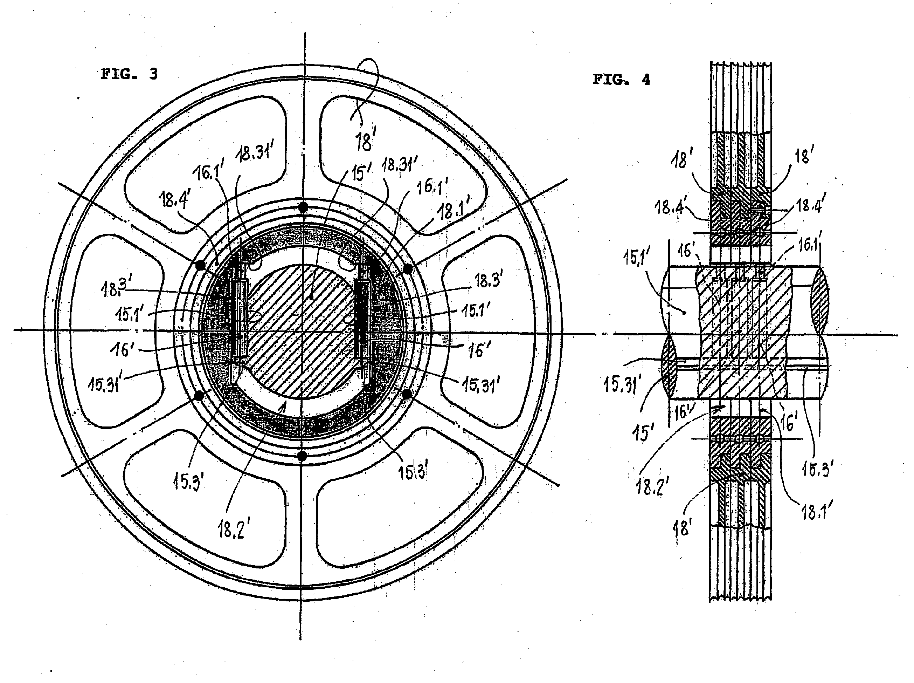

In order to obviate such drawback, a "multi-wire" machine object of international application no. WO 2007/036784 by the same applicant comprises an individual tensioning device of each of the cutting wires wound as a closed loop on respective pulleys with coplanar grooves, as shown in figures 4 to 8 of the drawings annexed to the same application.

Such known individual tensioning device comprises a support shaft, which has two opposite flat faces, vertical and parallel to one another, whereas the hub of each pulley carried by the same shaft has a substantially slot-shaped central mounting hole, with two opposite rectilinear and parallel sides, juxtaposed slidingly against said parallel flat faces of the shaft. The slot-shaped hole allows the pulley to carry out a translational movement relative to the shaft, which is stationary. Moreover, at each pulley mounted thereon, the shaft has a respective substantially radial blind hole, with vertical axis, open on its outer surface and wherein a corresponding thrust cylinder is mounted with fluid seal and axial sliding. A continuous longitudinal hole runs through said shaft and places the radial blind holes in fluid communication with a feeding source of fluid under pressure external to the shaft. By such arrangement, before starting the cutting operation, when all cutting wires are wound as a closed loop on the coplanar grooves of the respective pulleys, according to respective substantially vertical cutting planes, a fluid under pressure is fed through said longitudinal hole of the shaft and the corresponding radial holes, causing the partial axial extension of each cylinder and, therefore, the guided sliding of the corresponding pulley relative to the shaft. Such sliding stops when the reaction applied by the cutting wire partially wound on said pulley equals the fluid pressure acting on said cylinder. The proper individual tensioning of each cutting wire is thus obtained, which is subject to a slight tension of an extent substantially similar to that of all the other cutting wires. The suitable fluid pressure is kept constant in the above hydraulic circuit for the entire working cycle of the machine. Compared to the several advantages it exhibits, such known individual tensioning device for the cutting wires however implies a relatively high technical and economic expenditure for its realization, maintenance and operating management. Starting from the notion of such drawback, the present invention aims at solving it.

An object of the present invention is to provide a sawing machine having the features of claim 1 and a multi-wire machine having the features of claim 10.

Further advantageous features are described in the dependent claims.

The above claims are intended as integrally reported herein.

The present invention will appear more cleanly from the following detailed description made with reference to the annexed drawing provided by way of a non-limiting example only, wherein:

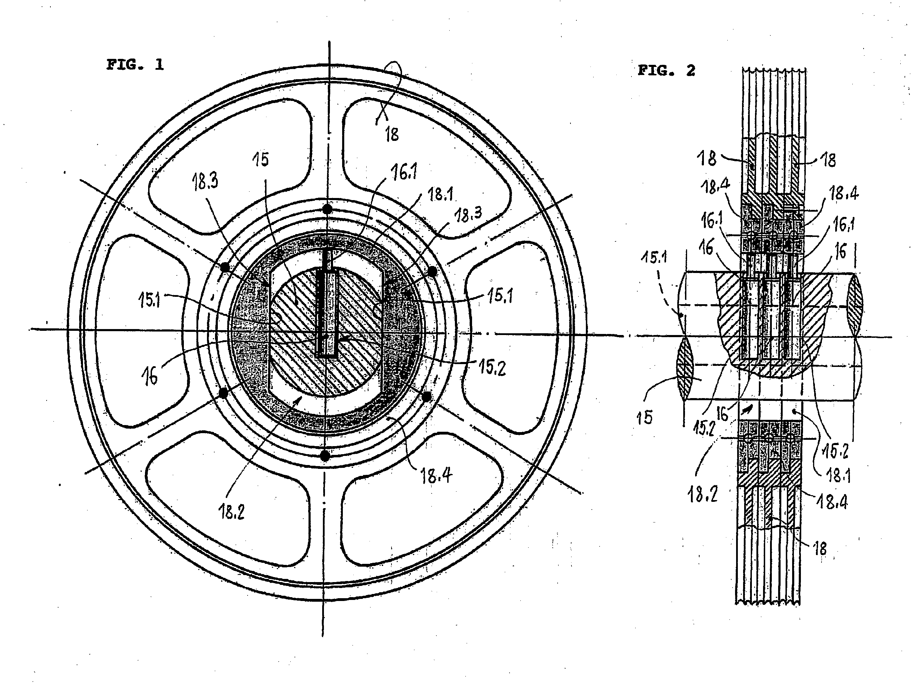

- fig. 1 shows a cross cutaway view of a shaft for supporting a packet of driven pulleys of a sawing machine for material in block form and wherein there are shown one of said pulleys and the relative device, according to a first embodiment of the invention, for tensioning a flexible member (not shown) partially wound on the same pulley;
- fig. 2 shows a partial axial cutaway view of three driven pulleys mounted packet-wise on the shaft of fig. 1, shown in a partial cutaway view, whereas for each of said pulleys there is shown the relative device, according to the invention, for tensioning the flexible member partially wound on the same;

- figures 3 and 4 show views respectively similar to those of the above figures 1 and 2, but they show a second embodiment of the invention;

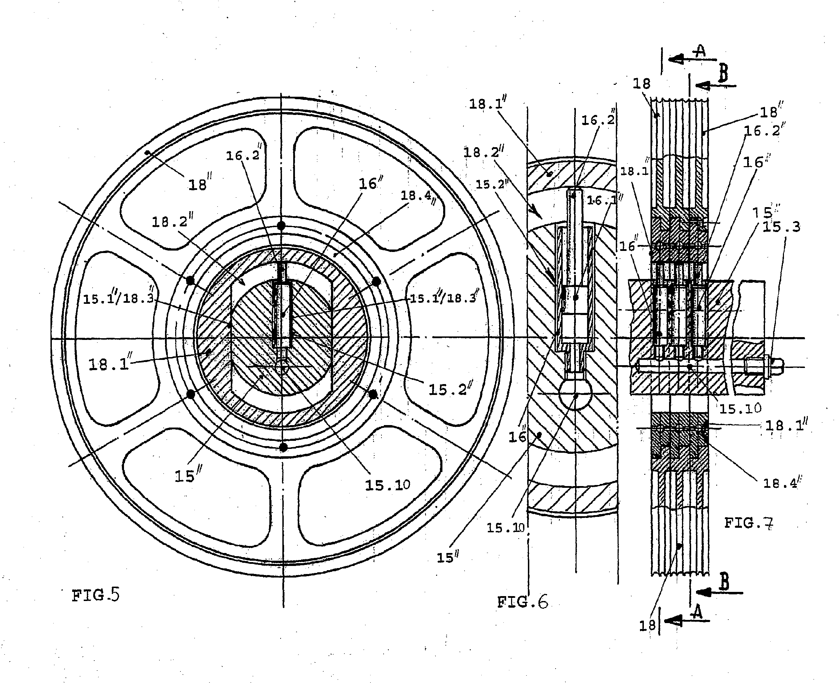

- fig. 5 shows a cross cutaway views, according to line B-B of fig. 7, of a shaft for supporting a packet of driven pulleys of a multi-wire sawing machine for material in block form and wherein there are shown one of said pulleys and the relative device, according to a third exemplary embodiment of the invention, for the individual tensioning of a flexible member (not shown) partially wound on the same pulley;
- fig. 6 shows a partial view in enlarged scale and cutaway according to line A-A of fig. 7;
- fig. 7 shows a partial axial cutaway view of three driven pulleys mounted packet-wise on the shaft of fig. 5, shown interrupted and in partial cutaway view, whereas for said pulleys there is shown the relative device, according to said third exemplary embodiment of the invention, for the individual tensioning of the flexible member partially wound on the same;

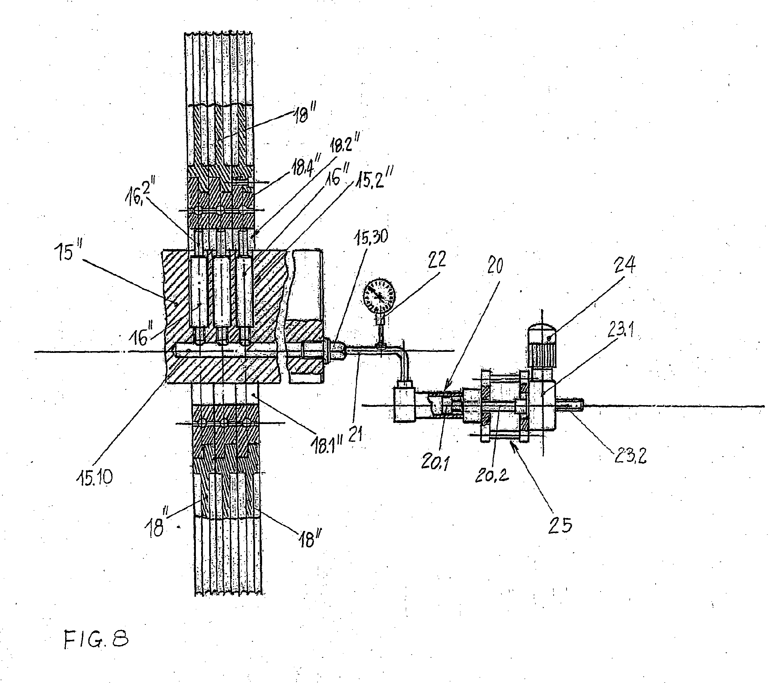

- fig. 8 shows a view similar to that of fig. 7, but in a different scale and showing a fourth exemplary embodiment of the individual tensioning device for flexible members wound on pulleys in a multi-wire sawing machine for material in block form according to the invention, wherein there are further provided means for adjusting the pressure of a gas used in the same device;

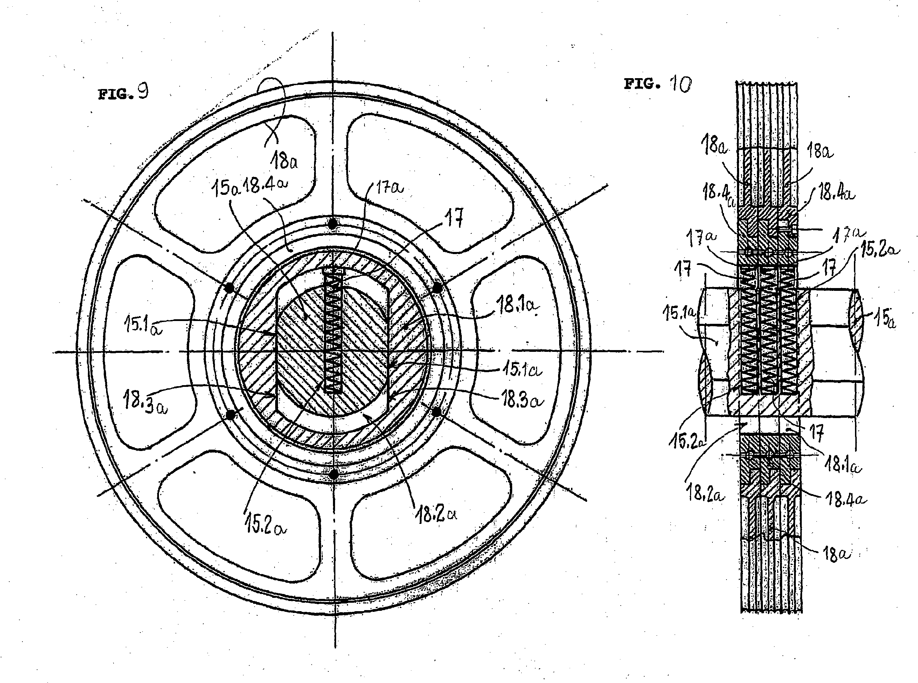

- fig. 9 shows a cross cutaway view of a shaft for supporting a packet of driven pulleys of a sawing machine for material in block form and wherein there are shown one of said pulleys and the relative device, according to a fifth embodiment of the invention, for tensioning a flexible member (not shown) partially wound on the same pulley;

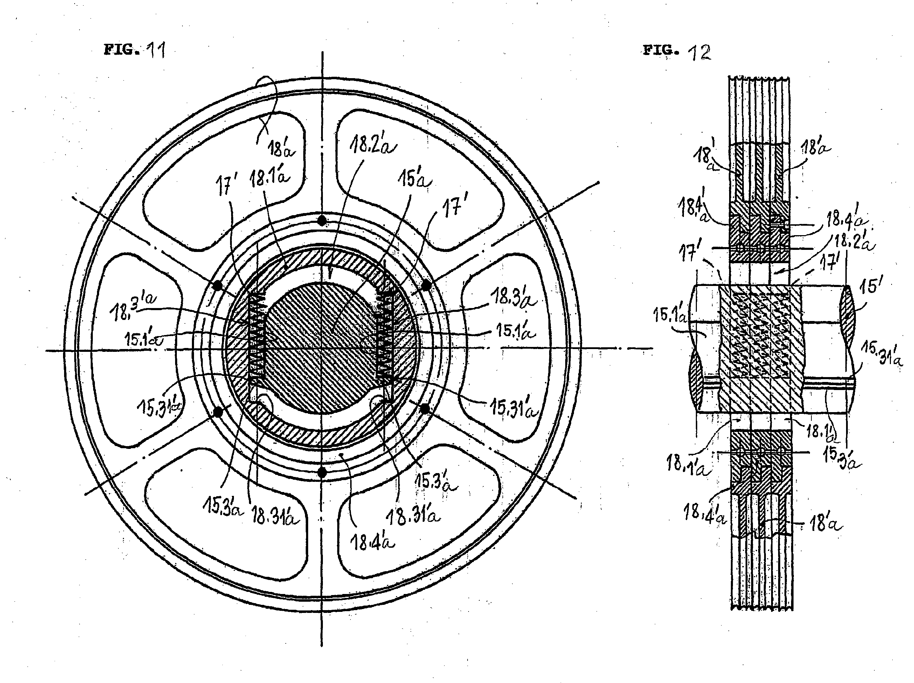

- fig. 10 shows a partial axial cutaway view of three driven pulleys mounted packet-wise on the shaft of fig. 9, shown in a partial cutaway view, whereas for each of said pulleys there is shown the relative device, according to the invention, for tensioning the flexible member partially wound on the same; - figures 11 and 12 show views respectively similar to those of the above figures 9 and 10, but they show a sixth exemplary embodiment of the invention.

### First embodiment: figures 1 and 2

Said figures show a packet arrangement of three driven pulleys on a stationary support shaft in a sawing machine for cutting material in block form, for example stony material, of the so-called "multi-wire" type (not shown here). Such arrangement is known from the international application WO 2007/036784. In particular, said support shaft, indicated with (15), carries three driven pulleys (18). On each pulley (18) there is partially wound a corresponding cutting wire (diamond wire, not shown here), which engages at least one portion of the groove of said pulley, for example in the top right section thereof in fig. 1.

Such support shaft (15) has two opposite flat faces (15.1), parallel to one another, whereas the hub (18.1) of each pulley (18) carried by the same shaft has a substantially slot-shaped central mounting hole (18.2), with two opposite rectilinear and parallel sides (18.3), juxtaposed slidingly against said parallel flat faces (15.1) of the shaft (15). Said slot-shaped hole (18.2) allows said pulley (18) to carry out a translational movement relative to the shaft (15) in the direction of its larger axis. On the hub (18.1) of each pulley there is mounted a corresponding roller or ball bearing (18.4), which supports the respective pulley (18) in a freely rotating manner. At the level of each pulley (18) mounted on it, said shaft (15) has a respective blind hole (15.2), oriented in a substantially radial direction and open on the outer surface of the same shaft. According to the embodiment shown, said flat faces (15.1) of the shaft (15) are essentially vertical, while said blind holes (15.2) have the respective axes substantially vertical.

In each blind hole (15.2), a corresponding gas spring cylinder (16) is stably seated in a coaxial arrangement. Said gas spring cylinder (16) has a stem (16.1) at least partially extended beyond said hole (15.2) and arranged in contact with the opposite surface of the slot-shaped hole (18.2). In particular, said gas spring cylinder (16) is loaded with pressurised nitrogen gas. The operation of said gas spring cylinder is based on the following physical principle: the pressure of the nitrogen contained in the cylinder (16) pushes the spring stem (16.1) outwards. The extension force of the stem (16.1) is due to the difference between inner pressure and atmospheric pressure, or to the inner pressure that acts on the stem section. In this way, the- stem (16.1) of said spring cylinder (16) elastically stresses, in a substantially constant manner, the relative pulley (18) to translate upwards in fig. 1. By such arrangement, the elastic force of said gas spring cylinder (16) causes, in an automatic and constant manner, a relative sliding of the hub (18.1) with pulley (18) relative to the stationary shaft (15). Said sliding is guided in substantially vertical direction by sliding coupling between the flat faces (15.1) of the shaft (15) and the rectilinear sides (18.3) of the hole (18.2) of the hub (18). Such sliding stops when the reaction applied by the respective cutting wire partially wound on said pulley (18) equals the elastic force exerted by the gas spring cylinder (16) and acting on said hub (18.1): the proper individual tensioning of said cutting wire is thus obtained, which therefore is constantly subject to a slight tension of an extent substantially similar to that of all the other cutting wires.

The overall tensioning of all cutting wires wound as a closed loop on the respective pulleys (18) is then carried out, if needed, by moving the shaft (15) according to suitable extent and direction.

Each cutting wire therefore takes on a steady geometrical configuration, optimal for carrying out the cut during the machine working step.

It should be noted that the flat faces (15.1) of the shaft (15), the rectilinear sides (18.3) of the mounting hole (18.2) of the hub (18.1) of the pulleys (18) and the axis of the radial holes (15.2) of the shaft (15) and of the gas spring cylinders (16), which are all parallel to one another, may also have an inclination differing from that shown here, that is, other than vertical.

### Second embodiment: figures 3, 4

A support shaft, indicated with (15'), carries three driven pulleys (18') juxtaposed packet-wise. On each pulley (18') there is partially wound a corresponding cutting wire (diamond wire, not shown here), which engages at least one portion of the groove of said pulley, for example in the top right section thereof in fig. 3.

The support shaft (15') has two opposite substantially vertical flat faces (15.1'), and at the lower end of said faces, a respective continuous longitudinal integral tab (15.3'), the free end whereof (15.31') has a vertical flat surface. Said tabs (15.3') form respective support brackets and are specularly symmetrical relative to the vertical median plane of the shaft (15').

The hub (18.1') of each pulley (18') carried by the same shaft has a substantially slot-shaped central mounting hole (18.2') the opposite sides whereof (18.3') are vertical rectilinear. Said opposite sides (18.3') are provided into respective recesses (18.31') of the hole (18.2') with substantially horizontal heads. Said slot-shaped hole (18.2') allows said pulley (18) to carry out a translational movement relative to the stationary shaft (15') in the direction of its larger axis. On the hub (18.1') of each pulley there is mounted a corresponding roller or ball bearing (18.4'), which supports the respective pulley (18') in a freely rotating manner.

Between each bracket (15.3') of the shaft (15') and the upper head of the corresponding recess (18.31') of the slot-shaped hole (18.2') of each pulley there is interposed a respective gas spring cylinder gas (16') with essentially vertical axis. The body of said cylinder (16') is stably resting on or fastened to the respective bracket (15.3') and/or against a corresponding flat face (15.1') of the shaft (15'), whereas the free end of its stem (16.1') rests against the upper head of the relative recess (18.31'). On the other hand, the body of said cylinder slidingly rests against the rectilinear side (18.3') of the respective recess (18.31') of each hole (18.2').

In particular, each gas spring cylinder (16') is loaded with pressurised nitrogen gas.

As- explained above with reference to the first embodiment, each of said gas spring cylinders (16') works in compression and elastically stresses, in a substantially constant manner, the relative pulley (18') to translate upwards in fig. 3. The two gas spring cylinders (16') work in pairs.

By such arrangement, the elastic force of said gas spring cylinders (16') causes, in an automatic and constant manner, a relative sliding of the hub (18.1') with pulley (18') relative to the stationary shaft (15'). The above sliding is guided in substantially vertical direction by the sliding rest of the gas spring cylinders (16') against the rectilinear sides (18.3') of the recesses (18.31') of each pulley (18').

Unlike what shown in fig. 3, the opposite sides (18.3') of the slot-shaped hole (18.2') of each pulley (18') may be, for example, juxtaposed slidingly also against the flat surfaces (15.31') of the brackets (15.3') of the shaft (15'), which cooperate in guiding the above sliding in a substantially vertical direction. Such sliding stops when the reaction applied by the respective cutting wire partially wound on said pulley (18') equals the elastic force applied by the two gas spring cylinders (16') on said hub (18.1'): the proper individual tensioning of said cutting wire is thus obtained, which therefore is constantly subject to a slight tension of an extent substantially similar to that of all the other cutting wires. For the rest, reference shall be made to the above description of the first embodiment of the present invention.

### Third embodiment: figures 5, 6 and 7

Said figures show a packet arrangement of three driven pulleys on a support shaft in a sawing machine for cutting material in block form, for example stony material, of the so-called "multi-wire" type (not shown here). Such arrangement is known from international application WO 2007/036784 by the same applicant. In particular, said support shaft, indicated with (15"), carries three driven pulleys (18"). On each pulley (18") there is partially wound a corresponding cutting wire (diamond wire, not shown here), which engages at least one portion of the groove of said pulley, for example its top right section thereof in fig. 5. Such support shaft (15") has two opposite flat faces (15.1"), parallel to one another, whereas the hub (18.1") of each pulley (18") carried by the same shaft has a substantially slot-shaped central mounting hole (18.2"), with two opposite rectilinear and parallel sides (18.3"), juxtaposed slidingly against said parallel flat faces (15.1") of the shaft (15"). Said slot-shaped hole (18.2") allows said pulley (18") to carry out a translational movement relative to the shaft (15") in the direction of its larger axis. On the hub (18.1") of each pulley there is mounted a corresponding roller or ball bearing (18.4"), which supports the respective pulley (18") in a freely rotating manner.

At the level of each pulley (18") mounted on it, said shaft, (15") has a respective transverse blind hole (15.2"), oriented with substantially vertical axis and open at the upper end on the outer surface of the same shaft. Said transverse holes (15.2") at their other end have a reduced diameter and are threaded.

On the other hand, said flat faces (15.1") of the shaft (15") are essentially vertical.

A longitudinal blind hole (15.10) is provided in said shaft (15"), is open at an axial end of the same shaft and puts all of said transverse holes (15.2") sealingly in gas communication, at said threaded end thereof. A cap (15.3) closes said longitudinal hole (15.10) with a gas seal.

In each vertical transverse hole (15.2"), a corresponding gas spring cylinder (16") is stably sealingly seated, in a coaxial arrangement, by screwing of a lower end thereof, with reduced diameter and externally threaded, within the corresponding threaded end of said hole (15.2"). Said gas spring cylinder (16"), at said threaded end, is open and is put in gas-sealed communication with said longitudinal hole (15.10) of the shaft (15") (see fig. 6). Moreover, said gas spring cylinder (16") comprises a piston (16.1", fig. 6) with respective stem (16.2") with vertical axis and at least partially extended upward beyond said hole (15.2"). Said stem (16.2") is arranged in contact with the opposite surface of the slot-shaped hole (18.2") of the corresponding hub (18.1").

A closed pneumatic circuit is thus provided in the shaft (15"), wherein the inner pneumatic chambers of the gas spring cylinders (16") are all arranged in free gas-sealed communication with said longitudinal hole (15.10), forming an outer pneumatic chamber with constant volume. In said pneumatic circuit, sealingly closed by the cap (15.3), nitrogen gas is loaded at the desired working pressure.

The operation of the individual tensioning device according to the present embodiment is as follows; said gas spring cylinders (16") of the individual tensioning device according to the invention substantially operate based on the physical communicating vessels principle: the pressure of nitrogen contained in the inner pneumatic chamber of each cylinder (16") is always equal to that into the outer pneumatic chamber (15.10) of the shaft (15"); that is, the gas pressure found in the closed pneumatic circuit formed by said chambers is operatively constant. In particular, the nitrogen acts in said circuit at such pressure as to push the piston (16.1") of each cylinder (16") upwards. The upwards extension force of the corresponding stem (16.2") is due to the difference between the pressure inside the cylinder (16") and the atmospheric pressure, or to the inner pressure that acts on the section of the respective piston (16.1"). Therefore, the stem (16.2") of each gas spring cylinder (16") elastically stresses, in a substantially constant manner, the relative pulley (18") to translate upwards. All the gas spring cylinders (16" operate in this way, concurrently and constantly, under the same nitrogen pressure.

By such- arrangement, operatively, the elastic force of each gas spring cylinder (16") causes, in an automatic and constant manner, a relative sliding of the hub (18.1") with pulley (18") relative to the shaft (15"), which here is regarded as stationary. Said sliding is guided in substantially vertical direction by sliding coupling between the flat faces (15.1") of the shaft (15") and the rectilinear sides (18.3") of the hole (18.2") of the hub (18.1"). Such sliding stops when the reaction applied by the respective cutting wire partially wound on said pulley (18") equals the elastic force exerted by the gas spring cylinder (16") on said hub (18.1"): the proper individual tensioning of each cutting wire is thus obtained, which therefore is constantly subject to a slight tension of an extent substantially similar to that of all the other cutting wires. Advantages of the above individual tensioning device:
1) Considering the incompressibility features of liquids and the compressibility of gases, the individual tensioning device-according to the present invention, if compared with an individual tensioning device with oil hydraulic jack or the like, is faster and more elastic in the action for compensating the tension of each wire, that is: each gas spring cylinder reacts more quickly both when it allows the wire elongation, and when it causes the shortening of the same wire.
2) Moreover, in order to change, for example increase, the gas pressure into the individual tensioning device according to the present invention, it is sufficient to provide a sealed retain valve (similar to that of tyres) at the inlet of the longitudinal hole (15.10) (in replacement of cap 15.3) and connect a pressurized gas cylinder, measuring the pressure value in the pneumatic circuit (15.10, 16") with a pressure gauge. Once the desired pressure in the above pneumatic circuit has been reached, the same is sealingly closed by the cap (15.3).

The overall tensioning of all cutting wires wound as a closed loop on the respective pulleys (18") is then carried out, if needed, by moving the shaft (15") according to suitable extent and direction. Each cutting wire therefore takes on a steady geometrical configuration, optimal for carrying out the cut during the machine working step.

It should be noted that the flat faces (15.1") of the shaft (15"), the rectilinear sides (18.3") of the mounting hole (18.2") of the hub- (18.1") of the pulleys (18") and the axis of the radial holes (15.2") of the shaft (15") and of the gas spring cylinders (16"), which are all substantially parallel to one another, may also have an inclination differing from that shown here, that is, other than vertical.

### Fourth embodiment: figure 8

The left side of fig. 8 shows, in a reduced scale, the individual tensioning device according to the above third exemplary embodiment of the invention, with the difference that the cap (15.3) here is replaced by a sealed threaded union (15.30). The parts of such tensioning device similar to those of the tensioning device according to the third embodiment described above are indicated with the same reference numerals. Said union (15.30) puts the longitudinal hole (15.10) of the shaft (15") in gas-sealed communication with a pneumatic chamber of an outer pneumatic cylinder (20) through a stiff conduit (21), relative whereto a pressure gauge (22) sealingly branches off. A piston (20.1) with relative stiff coaxial stem (20.2) sealingly slides in said pneumatic cylinder (20), extending externally to cylinder (20) from the end opposite that connected to the conduit (21). Said stem (20.2) is kinematically connected, in an in se known manner, to a mechanical jack (23.1) with trapezoidal screw (23.2), controlled by an electric gearmotor (24). Said mechanical trapezoidal screw jack (23.1, 23.2) and said pneumatic cylinder (20) are stably supported in the correct reciprocal arrangement by a stiff frame (25).

Said hole (15.10) of the shaft (15") and the inner pneumatic chamber of the cylinder (20), pneumatically sealingly connected to each other through the union (15.30) and the conduit (21), together with the inner pneumatic chambers of the gas spring cylinders (16") form a sealingly closed pneumatic circuit, wherein nitrogen gas is loaded at the desired pressure, according to what explained above. In particular, said inner pneumatic chamber of the cylinder (20) has a variable volume, according to the relative position of the piston (20.1) relative to the cylinder (20), and therefore acts as chamber for adjusting the gas pressure into the same circuit. By suitably actuating the gearmotor (24), it is therefore possible to adjust the gas operating pressure into said circuit, gas pressure that is operatively equal in all the gas spring cylinders (16"), thus obtaining an always even tensioning of all the cutting wires wound on the pulleys (18").

The present embodiment of the invention is particularly advantageous if, for example, some of the tensioning pulleys (18") carried by the shaft (15") are removed for reducing the number of cutting wires operating is the multi-wire sawing machine. In this case, the pistons (16.1") of the gas spring cylinders (16") corresponding to the removed pulleys are automatically stressed to arrange at the top travel end, correspondingly increasing the inner volume of said pneumatic circuit. If there was no possibility of correcting such volume increase, a possibility that the device according to the invention allows through the corresponding movement of the piston (20.1) in the adjustment cylinder (20), there would be a sudden gas pressure drop within the same circuit, which may compromise the good operation of the sawing machine. On the other hand, sometimes it is advisable to be able to change, at the same operating conditions, the gas pressure into said pneumatic circuit based on the features of the material to be cut. The individual tensioning device according to the above fourth embodiment of the invention allows carrying out, when required, a set up of the gas operating pressure in the relative pneumatic circuit, in a quick, precise and specific manner.

### Fifth embodiment: figures 9 and 10

Said figures show a packet arrangement of three driven pulleys on a stationary support shaft in a sawing machine for cutting material in block form, for example stony material, of the so-called "multi-wire"- type (not shown here). Such arrangement is known from the international application WO 2007/036784. In particular, said support shaft, indicated with (15a), carries three driven pulleys (18a). On each pulley (18a) there is partially wound a corresponding cutting wire (diamond wire, not shown here), which engages at least one portion of the groove of said pulley, for example in the top right section thereof in fig. 9.

Such support shaft (15a) has two opposite flat faces (15.1a), parallel to one another, whereas the hub (18.1a) of each pulley (18a) carried by the same shaft has a substantially slot-shaped central mounting hole (18.2a), with two opposite rectilinear and parallel sides (18.3a), juxtaposed slidingly against said parallel flat faces (15.1a) of the shaft (15a). Said slot-shaped hole (18.2a) allows said pulley (18a) to carry out a translational movement relative to the shaft (15a) in the direction of its large axis. On the hub (18.1a) of each pulley there is mounted a corresponding roller or ball bearing (18.4a), which supports the respective pulley (18a) in a freely rotating manner.

At the level of each pulley (18a) mounted on it, said shaft (15a) has a respective blind hole (15.2a), oriented in a substantially radial direction and open on the outer surface of the same shaft.

According to the embodiment shown herein, said flat faces (15.1a) of the shaft (15a) are essentially vertical, while said blind holes (15.2a) have the respective axes substantially vertical.

In each blind hole (15.2a), a cylindrical helical spring (17) is seated coaxial, rests with an end thereof on the bottom of the same hole and protrudes with the other end beyond the same hole. At said other end, the spring (17) supports a guiding and contact member consisting of a stem (not visible in the drawing), inserted coaxial into said spring, and of a cylindrical head (17a) with larger outer diameter than that of said spring (17), whereon said head rests. On the other hand, said head (17a) is arranged in contact with the opposite surface of the slot-shaped hole (18.2a).

Said spring (17) works in compression and elastically stresses, through said head (17a), in a substantially constant manner, the relative pulley (18a) to translate upwards in fig. 9. By such arrangement, the elastic force of the spring (17) causes, in an automatic and constant manner, a relative sliding of the hub (18.1a) with pulley (18a) relative to the stationary shaft (15a). Said sliding is guided in substantially vertical direction by sliding coupling between the flat faces (15.1a) of the shaft (15a) and the rectilinear sides (18.3a) of the hole (18.2a) of the hub (18.1a). Such sliding stops when the reaction applied by the respective cutting wire partially wound on said pulley (18a) equals the elastic force of the spring (17) acting on said hub (18.1a) : the proper individual tensioning of said cutting wire is thus obtained, which therefore is constantly subject to a slight tension of an extent substantially similar to that of all the other cutting wires.

The overall tensioning of all cutting wires wound as a closed loop on the respective pulleys (18a) is then carried out, if needed, by moving the shaft (15a) according to suitable extent and direction.

Each cutting wire therefore takes on a steady geometrical configuration, optimal for carrying out the cut during the machine working step.

It should be noted that the flat faces (15.1a) of the shaft (15a), the rectilinear sides (18.3a) of the mounting hole (18.2a) of the hub (18.1a) and the axis of the radial holes (15.2a) of the shaft (15a) and of the springs (17), which are all parallel to one another, may also have an inclination differing from that shown here, that is, other than vertical.

### Sixth embodiment: figures 11, 12

A support shaft, indicated with (15a'), carries three driven pulleys (18a') juxtaposed packet-wise. On each pulley (18a') there is partially wound a corresponding cutting wire (diamond wire, not show here), which engages at least one portion of the groove of said pulley, for example in the top right section thereof in fig. 11.

The support shaft (15a') has two opposite substantially vertical flat faces (15.1a'), and at the lower end of said faces, a respective continuous longitudinal integral tab (15.3a'), the free end whereof (15.3a') has a vertical flat surface. Said tabs (15.3a') are specularly symmetrical relative to the horizontal median plane of the shaft (15a').

The hub (18.1a') of each pulley (18a') carried by the same shaft has a substantially slot-shaped central mounting hole (18.2a'), wherein two opposite rectilinear vertical sides (18.3a') are provided in respective recesses (18.31') with substantially horizontal heads and are juxtaposed slidingly against said flat surfaces (15.31a') of the opposite tabs (15.3a') of the shaft (15a'). Said slot-shaped hole (18.2a') allows said pulley (18a') to carry out a translational movement relative to the stationary shaft (15a') in the direction of its larger axis. On the hub (18.1a') of each pulley there is mounted a corresponding roller or ball bearing (18.4a'), which supports the respective pulley (18a') in a freely rotating manner.

Between each tab (15.3a') of the shaft (15a') and the upper head of the corresponding recess (18.31') of the slot-shaped hole (18.2a') of each pulley there is interposed a respective cylindrical helical spring (17') with essentially vertical axis. The two springs (17') work in compression and elastically stress, in a substantially constant manner, the relative pulley (18a') to translate upwards in fig. 11. The two springs (17') work in pairs.

By such arrangement, the elastic force of the springs (17') causes, in an automatic and constant manner, a relative sliding of the hub (18.1a') with pulley (18a') relative to the stationary shaft (15a'). Said sliding is guided in substantially vertical direction by sliding coupling between the flat faces (15.31a') of the tabs (15.3a') of the shaft (15a') and the rectilinear sides (18.3a') of the hole (18.2a') of the hub

(18.1a'). Such sliding stops when the reaction applied by the respective cutting wire partially wound on said pulley (18a') equals the elastic force applied by the two springs (17') on said hub- (18.a'): the proper individual tensioning of said cutting wire is thus obtained, which therefore is constantly subject to a slight tension of an extent substantially similar to that of all the other cutting wires.

## Claims

1. Sawing machine for sawing material in block form, comprising a flexible member wound on pulleys; a tensioning device for tensioning said flexible member; wherein said tensioning device comprises a shaft (15, 15', 15", 15a, 15a') for supporting one or more pulleys (18, 18', 18", 18a, 18a'), on each whereof there is partially wound a respective flexible cutting wire member, whereas said shaft has two opposite flat faces (15.1, 15.1', 15.1", 15.1a, 15.31a') parallel to one another and the hub (18.1, 18.1', 18.1", 18.1a, 18.1a') of each pulley carried by the same shaft has a substantially slot-shaped central mounting hole (18.2, 18.2', 18.2", 18.2a, 18.2a') with two opposite rectilinear and parallel sides (18.3, 18.3', 18.3", 18.3a, 18.3a') juxtaposed slidingly against said parallel flat faces (15.1, 15.1', 15.1", 15.1a, 15.31a') of the shaft, so that said slot-shaped hole (18.2, 18.2', 18.2", 18.2a, 18.2a') allows said pulley (18, 18', 18",18a, 18a') to carry out a translational movement relative to the shaft (15, 15', 15", 15a, 15a'), whereas on the hub (18.1, 18.1', 18.1", 18.1a, 18.1a') of each pulley there is mounted a corresponding bearing (18.4, 18.4', 18.4", 18.4a, 18.4a'), which supports the respective pulley (18a, 18a') in a freely rotating manner,
**characterised in that**
said tensioning device comprises elastic means (16, 16', 16", 17, 17') interposed between said support shaft (15, 15', 15", 15a, 15a') and said hub (18.1, 18.1', 18.1", 18.1a, 18.1a') of each pulley (18, 18', 18", 18a, 18a'), so that their elastic force causes, in an automatic and constant manner, a relative sliding of said hub with pulley relative to the same shaft, said sliding being guided by sliding coupling between said flat faces (15.1, 15.1', 15.1", 15.1a, 15.31a') of the shaft (15, 15', 15", 15a, 15a') and the rectilinear sides (18.3, 18.3', 18.3", 18.3a, 18.3a') of said hole (18.2, 18.2', 18.2", 18.2a, 18.2a') of the hub (18.1, 18.1', 18.1", 18.1a, 18.1a') and being stopped when the reaction applied by the respective cutting wire partially wound on said pulley (18, 18', 18", 18a, 18a') equals the elastic force of said elastic means (16, 16', 16", 17, 17') acting on said hub (18.1, 18.1', 18.1", 18.1a, 18.1a'), thus obtaining the proper individual tensioning of each cutting wire.

2. Sawing machine according to claim 1, **characterised in that** it comprises gas spring cylinder elastic means (16, 16') interposed, in said mounting hole (18.2, 18.2') of each pulley (18, 18'), between said support shaft (15, 15') and said hub (18.1, 18.1') of each pulley (18, 18'), in a manner such that the elastic force thereof determines, in an automatic and constant manner, relative sliding of the hub (18.1, 18.1') with pulley (18, 18') with respect to the shaft (15, 15'), said sliding being stopped when the reaction applied by the respective cutting wire partially wound on said pulley (18, 18') matches the elastic force of said elastic means (16, 16') acting on said hub (18.1, 18.1'), thereby producing the correct individual tensioning of each cutting wire.

3. Sawing machine according to claim 2, **characterised in that** said gas spring cylinder (16, 16') is loaded with pressurised nitrogen gas.

4. Sawing machine according to claim 2 and/or 3, wherein said shaft (15) is provided, at each pulley (18) mounted thereon, with a respective hole (15.2), open on the outer surface of the shaft, **characterized in that** a corresponding gas spring cylinder (16) is stably housed in each hole (15.2) and is provided with a stem (16.1) at least partially extending beyond said hole (15.2) and positioned in contact with the opposed surface of the mounting hole (18.2) of a respective pulley (18), so that said gas spring cylinder (16) elastically stresses, in a substantially constant manner, the relative pulley (18) to translate with respect to the shaft (15) according to a direction useful for constant and correct tensioning of the cutting wire wound partially on the pulley.

5. Sawing machine according to claim 4, wherein said shaft (15) is provided with two opposite flat faces (15.1), mutually parallel, while the hub (18.1) of each pulley (18) carried by the shaft is provided with a substantially slot-shaped central mounting hole (18.2), with two rectilinear and parallel opposite sides (18.3) juxtaposed slidingly against said parallel flat faces (15.1) of the shaft (15), **characterised in that** relative sliding of the hub (18.1) with pulley (18) with respect to the shaft (15) is guided by means of sliding coupling between said flat faces (15.1) of the shaft (15) and the rectilinear sides (18.3) of said hole (18.2) of the hub (18).

6. Sawing machine according to claim 2 and/or 3, **characterised in that** said shaft (15') is provided with a pair of brackets (15.3') positioned on opposite sides of the shaft, and **in that** a respective gas spring cylinder (16') is interposed between each bracket (15.3') of the shaft (15') and the opposed inner surface of the mounting hole (18.2') of each pulley (18').

7. Sawing machine according to claim 6, wherein said shaft (15') is provided with two flat opposite faces (15.1'), mutually parallel, while the hub (18.1') of each pulley (18'), carried by the shaft is provided with a substantially slot-shaped central mounting hole (18.2'), with two rectilinear and parallel opposite sides (18.3'), **characterised in that** the body of each gas spring cylinder (16') is stably resting on or fastened to a bracket (15.3') and/or against a corresponding flat face (15.1') of the shaft (15'), while it rests, slidingly, against a rectilinear side (18.3') of a mounting hole (18.2') of a respective pulley (18'), in a manner such that relative sliding of the hub (18.1') with pulley (18') with respect to the shaft (15') is guided by means of sliding coupling between said parts.

8. Sawing machine according to claim 6 and/or 7, wherein said hub (18.1') of each pulley (18') carried by the shaft is- provided with a substantially slot-shaped central mounting hole (18.2'), with two rectilinear and parallel opposite sides (18.3'), **characterised in that** said brackets (15.3') are provided with respective flat end faces (15.31') juxtaposed slidingly against the opposite sides (18.3') of said mounting hole (18.2'), in a manner such that relative sliding of the hub (18.1') with pulley (18') with respect to the shaft (15') is guided by means of sliding coupling between said parts.

9. Sawing machine according to one or more of the preceding claims, **characterised in that** said flat faces (15.1, 15.1') of the shaft (15, 15') are essentially vertical, while the respective axes of said gas spring cylinders (16, 16') are substantially vertical.

10. Multi-wire sawing machine for sawing material in block form:
- comprising flexible members wound on pulleys; individual tensioning devices for tensioning said flexible members; wherein said individual tensioning devices comprise a shaft (15") for supporting a plurality of driven pulleys (18"), on each whereof there is partially wound a respective flexible cutting wire member, whereas the hub (18.1") of each pulley (18") carried by the same shaft has a central mounting hole (18.2"), which allows said pulley (18") to carry out a guided translational movement relative to the shaft (15"); on said hub (18.1") there being mounted a corresponding bearing (18.4"), which supports the respective pulley (18") in a freely rotating manner,
- and wherein said shaft (15") has, at each pulley (18") mounted thereon, a respective transverse blind hole (15.2"), open on the outer surface of the same shaft and wherein a corresponding pneumatic cylinder (16") is stably seated and has an inner chamber wherein a respective piston (16.1") with stem (16.2") sealingly slides, pushed to partially extend beyond said hole (15.2") and arranged in contact with the opposite surface of- the mounting hole (18.2") of the hub (18.1") of the respective pulley (18"), so that said pneumatic cylinder (16") stresses the relative pulley (18") to translate relative to the shaft (15") according to a direction useful to the proper tensioning of the cutting wire at least partially wound on the same pulley, obtaining the proper individual tensioning of each cutting wire,
**characterised in that** the inner chambers of said pneumatic cylinders (16") communicates with a gas seal with a common outer pneumatic chamber (15.10; 15.10, 15.30, 21, 20), so that said inner chambers of the pneumatic cylinders (16") and said common outer chamber (15.10; 15.10, 15.30, 21, 20) form a sealingly closed pneumatic circuit (16", 15.10; 16", 15.10, 15.30, 21, 20) and containing a gas that acts with even pressure on all of said pistons (16.1") of said pneumatic cylinders (16"), ensuring the proper and even tensioning of all the corresponding cutting wires.

11. Multi-wire sawing machine according to claim 10, **characterised in that** said common outer pneumatic chamber (15.10) has a constant volume.

12. Multi-wire sawing machine according to claim 11, **characterised in that** said common outer pneumatic chamber (15.10) comprises at least one hole (15.10) in said shaft (15").

13. Multi-wire sawing machine according to claim 12, **characterised in that** said hole (15.10) leads at one end of said shaft (15") at least, wherein it is closed by a pneumatic seal member (15.3).

14. Multi-wire sawing machine according to claim 10, **characterised in that** said common outer pneumatic chamber (15.10, 15.30, 21, 20) has a variable volume.

15. Multi-wire sawing machine according to claim 14, **characterised in that** said common outer pneumatic chamber (15.10, 15.30, 21, 20) is at least partially provided in a further pneumatic cylinder (20), wherein a sliding piston (20.1) is adjustable in its relative position for adjusting the gas pressure into said sealingly closed pneumatic circuit (16", 15.10, 15.30, 21, 20).

16. Multi-wire sawing machine according to claims 10 and 15, **characterised in that** said sealingly closed pneumatic circuit (16", 15.10, 15.30, 21, 20) comprises the inner chambers of said pneumatic cylinders (16") in said shaft (15"), a hole (15.10) in said shaft (15"), said inner chamber of said further pneumatic cylinder (20).

17. Multi-wire sawing machine according to claims 15 and/or 16, **characterised in that** a piston (20.1) with stem (20.2) slides in said inner chamber of said further pneumatic cylinder (20), adjustable in its relative position by control means (23.1, 23.2, 24).

18. Multi-wire sawing machine according to claim 17, **characterised in that** said control means comprise a mechanical trapezoidal screw jack (23.1, 23.2) kinematically connected relative to the stem (20.2) of said further pneumatic cylinder (20) and controlled by an electric gearmotor (24).

19. Sawing machine according to claim 1, wherein said shaft (15a) is provided, at each pulley (18a) mounted thereon, with a respective blind hole (15.2a), open on its outer surface, **characterized in that** it comprises a cylindrical helical spring (17) seated coaxial in said blind hole (15.2a) and interposed between the bottom of said hole (15.2a) and the hub (18.1a) of the corresponding pulley (18a), so that said spring (17) elastically stresses, in a substantially constant manner, the relative pulley (18a) to translate relative to the shaft (15a) according to a direction useful to the constant and correct tensioning of the cutting wire partially wound on the same pulley.

20. Sawing machine according to claim 1, wherein the hub (18.1a') of each pulley (18a') carried by the shaft (15a') has a substantially slot-shaped central mounting hole (18.2a') with two opposite rectilinear sides (18.3a'), **characterised in that** said two opposite rectilinear sides (18.3a') of said hole (18.2a') are provided into respective recesses (18.31a') and are juxtaposed slidingly against respective opposite flat surfaces (1-5.31a') of tabs (15.3a-') of said shaft (15a'), and **in that** between each tab (15.3a') of said shaft (15a') and an end of the respective recess (18.31a') of said hole (18.2a') there is interposed a respective cylindrical helical spring (17'), which elastically stresses, in a substantially constant manner, the relative pulley (18a') to translate relative to said shaft (15a') according to a direction useful to the constant and proper tensioning of the cutting wire partially wound on the same pulley.

21. Sawing machine according to claim 19, **characterised in that** said flat faces (15.1a) of the shaft (15a) are essentially vertical, while said blind holes (15.2a) of said shaft (15a) have the respective axes substantially vertical.

22. Sawing machine according to claim 20, **characterised in that** said flat faces (15.31a') of the shaft (15a') are essentially vertical, while said cylindrical helical springs (17') have the respective axes substantially vertical.

## Patentansprüche

1. Sägemaschine zum Sägen von Material in Blockform, umfassend ein über Rollen gewickeltes flexibles Element; eine Spannvorrichtung zum Spannen des flexiblen Elements; worin die Spannvorrichtung eine Welle (15, 15', 15", 15a, 15a') zum Tragen von einer oder mehreren Rollen (18, 18', 18", 18a, 18a') umfasst, über die jeweils ein entsprechendes flexibles Sägedrahtelement teilweise gewickelt ist, während die Welle zwei entgegengesetzte flache, zueinander parallele Seiten (15.1, 15.1', 15.1", 15.1a, 15.31a') aufweist und die Nabe (18.1, 18.1', 18.1", 18.1a, 18.1a') von jeder von der Welle getragenen Rolle eine zentrale Montagebohrung (18.2, 18.2', 18.2", 18.2a, 18.2a') aufweist, im wesentlichen schlitzförmig mit zwei entgegengesetzten geraden und parallelen Flanken (18.3, 18.3', 18.3", 18.3a, 18.3a'), derart gegen die flachen parallelen Seiten der Welle verschiebbar nebeneinandergelagert (15.1, 15.1', 15.1", 15.1a, 15.31a'), dass die Schlitzbohrung (18.2, 18.2', 18.2", 18.2a, 18.2a') der Rolle (18, 18', 18", 18a, 18a') ermöglicht, eine translatorische Bewegung bezüglich der Welle (15, 15', 15", 15a, 15a') durchzuführen, während an der Nabe (18.1, 18.1', 18.1", 18.1a, 18.1a') von jeder Rolle ein entsprechendes Lager (18.4, 18.4', 18.4", 18.4a, 18.4a') montiert ist, das die jeweilige Rolle (18a, 18a') auf frei rotierende Weise trägt,
**dadurch gekennzeichnet, dass**
die Spannvorrichtung elastische Mittel (16, 16', 16", 17, 17') umfasst, gelagert zwischen der Trägerwelle (15, 15', 15", 15a, 15a') und der Nabe (18.1, 18.1', 18.1", 18.1a, 18.1a') von jeder Rolle (18, 18', 18", 18a, 18a'), sodass ihre Federkraft automatisch und konstant jeweils ein Gleiten der Nabe mit der Rolle bezuglich der Welle selbst bestimmt, wobei die Gleitbewegung durch Schiebekupplung zwischen den ebenen Seiten (15.1, 15.1', 15.1", 15.1a, 15.31a') der Welle (15, 15', 15", 15a, 15a') und den geraden Flanken (18.3, 18.3', 18.3", 18.3a, 18.3a') der Bohrung (18.2, 18.2', 18.2", 18.2a, 18.2a') der Nabe (18.1, 18.1', 18.1", 18.1a, 18.1a') gesteuert wird und zum Stillstand kommt, wenn die vom jeweiligen teilweise über die Rolle (18, 18', 18", 18a, 18a') gewickelten Sägedraht angewandte Reaktion mit der Federkraft der auf die Nabe (18.1, 18.1', 18.1", 18.1a, 18.1a') wirkenden elastischen Mittel (16, 16', 16", 17, 17') übereinstimmt, sodass die korrekte individuelle Spannung von jedem Sägedraht erreicht wird.

2. Sägemaschine nach Anspruch 1, **dadurch gekennzeichnet, dass** sie elastische Mittel in Form von Gasdruckfedern (16, 16') umfasst, derart in der Montagebohrung (18.2, 18.2') von jeder Rolle (18, 18') zwischen der Trägerwelle (15, 15') und der Nabe (18.1, 18.1') von jeder Rolle (18, 18') gelagert, dass ihre Federkraft automatisch und konstant jeweils ein Gleiten der Nabe (18.1, 18.1') mit der Rolle (18, 18') bezüglich der Welle (15, 15') bestimmt, wobei die Gleitbewegung zum Stillstand kommt, wenn die vom jeweiligen teilweise über die Rolle (18, 18') gewickelten Sägedraht angewandte Reaktion mit der Federkraft der auf die Nabe (18.1, 18.1') wirkenden elastischen Mittel (16, 16') übereinstimmt, sodass die korrekte individuelle Spannung von jedem Sägedraht erreicht wird.

3. Sägemaschine nach Anspruch 2, **dadurch gekennzeichnet, dass** die Gasdruckfeder (16, 16') mit Stickstoffgas unter Druck gefüllt ist.

4. Sägemaschine nach Anspruch 2 und/oder 3, in der die Welle (15) an jeder auf sie montierten Rolle (18) eine jeweilige Bohrung (15.2), offen auf der Außenfläche der Welle aufweist, **dadurch gekennzeichnet, dass** eine entsprechende Gasdruckfeder (16) in jede Bohrung (15.2) ortsfest eingesetzt ist und eine mindestens teilweise über die Bohrung (15.2) hinaus reichende und in Kontakt mit der entgegengesetzten Fläche der Montagebohrung (18.2) einer jeweiligen Rolle (18) positionierte Stange (16.1) aufweist, sodass die Gasdruckfeder (16) auf eine im wesentlichen konstante Weise die jeweilige Rolle (18) elastisch belastet und dazu führt, sich bezüglich der Welle (15) nach einer für die konstante und korrekte Spannung des teilweise über die Rolle gewickelten Sägedrahts nützlichen Richtung zu bewegen.

5. Sägemaschine nach Anspruch 4, in der die Welle (15) zwei entgegengesetzte flache, zueinander parallele Seiten (15.1) aufweist, während die Nabe (18.1) von jeder von der Welle getragenen Rolle eine zentrale Montagebohrung (18.2) aufweist, im wesentlichen schlitzförmig mit zwei entgegengesetzten geraden und parallelen Flanken (18.3), gegen die flachen parallelen Seiten (15.1) der Welle (15) verschiebbar nebeneinandergelagert, **dadurch gekennzeichnet, dass** die jeweilige Gleitbewegung der Nabe (18.1) mit der Rolle (18) bezüglich der Welle (15) durch Schiebekupplung zwischen den ebenen Seiten (15.1) der Welle (15) und den geraden Flanken (18.3) der Bohrung (18.2) der Nabe (18) gesteuert wird.

6. Sägemaschine nach Anspruch 2 und/oder 3, **dadurch gekennzeichnet, dass** die Welle (15') ein Paar Kragbalken (15.3') aufweist, angeordnet an entgegengesetzten Seiten der Welle und dadurch, dass zwischen jedem Kragbalken (15.3') der Welle (15') und der entgegengesetzten Innenfläche der Montagebohrung (18.2') von jeder Rolle (18') eine jeweilige Gasdruckfeder (16') gelagert ist.

7. Sägemaschine nach Anspruch 6, in der die Welle (15') zwei entgegengesetzte flache, zueinander parallele Seiten (15.1') aufweist, während die Nabe (18.1') von jeder von der Welle getragenen Rolle (18') eine zentrale Montagebohrung (18.2') aufweist, im wesentlichen schlitzförmig mit zwei entgegengesetzten geraden und parallelen Flanken (18.3'), **dadurch gekennzeichnet, dass** der Körper von jeder Gasdruckfeder (16') auf einem Kragbalken (15.3') und/oder gegen eine entsprechende ebene Seite (15.1') der Welle (15') ortsfest aufliegt oder befestigt ist, während er gegen eine gerade flanke (18.3') einer Montagebohrung (18.2') einer jeweiligen Rolle (18') verschiebbar aufliegt, sodass die jeweilige Gleitbewegung der Nabe (18.1') mit der Rolle (18') bezüglich der Welle (15') mittels Schiebekupplung zwischen den genannten Teilen gesteuert wird.

8. Sägemaschine nach Anspruch 6 und/oder 7, in der die Nabe (18.1') von jeder von der Welle getragenen Rolle (18') eine zentrale Montagebohrung (18.2') aufweist, im wesentlichen schlitzförmig mit zwei entgegengesetzten geraden und parallelen Flanken (18.3'), **dadurch gekennzeichnet, dass** die Kragbalken (15.3') jeweils ebene Endflächen (15.31') aufweisen, die gegen die entgegengesetzten Flanken (18.3') der Montagebohrung (18.2') verschiebbar nebeneinandergelagert sind, sodass die jeweilige Gleitbewegung der Nabe (18.1') mit der Rolle (18') bezüglich der Welle mittels Schiebekupplung zwischen den genannten Teilen gesteuert wird.

9. Sagemaschine nach einem oder mehreren der vorhergehenden Ansprüche, **dadurch gekennzeichnet, dass** die ebenen Seiten (15.1, 15.1') der Welle (15, 15') im wesentlichen vertikal sind, während die jeweiligen Achsen der Gasdruckfedern (16, 16') im wesentlichen vertikal sind.

10. Mehrdrahtsägemaschine zum Sägen von Material in Blockform:
- umfassend über Rollen gewickelte flexible Elemente; individuelle Spannvorrichtungen zum Spannen der flexiblen Elemente; worin die individuellen Spannvorrichtungen eine Welle (15") umfassen zum Tragen einer Mehrzahl von Führungsrollen (18"), über die jeweils mindestens teilweise ein entsprechendes flexibles Sägedrahtelement gewickelt ist, während die Nabe (18.1") von jeder von derselben Welle getragenen Rolle (18") eine zentrale Montagebohrung (18.2") aufweist, die es der Rolle (18") ermöglicht, eine gesteuerte translatorische Bewegung bezüglich der Welle (15") durchzuführen, wobei an der Nabe (18.1") ein entsprechendes Lager (18.4") angebracht ist, das die jeweilige Rolle (18") auf frei rotierende Weise lagert,
- und worin die Welle (15") an jeder auf ihr angebrachten Rolle (18") jeweils eine schräge Blindbohrung (15.2") aufweist, offen an der Außenfläche der Welle und in der ein entsprechender Luftzylinder (16") ortsfest gelagert ist und eine Innenkammer aufweist, in der jeweils ein Kolben (16.1") mit Stange (16.2") dicht gleitet, der teilweise über die Bohrung (15.2") hinaus geschoben wird und in Kontakt mit der entgegengesetzten Fläche der Montagebohrung (18.2") der Nabe (18.1") der jeweiligen Rolle (18") positioniert ist, sodass der Luftzylinder (16") die jeweilige Rolle (18") dazu führt, sich bezüglich der Welle (15") nach einer für die korrekte Spannung des mindestens teilweise über die Rolle gewickelten Sägedrahts nützlichen Richtung zu bewegen und damit die korrekte individuelle Spannung von jedem Sägedraht herzustellen,
**dadurch gekennzeichnet, dass** die Innenkammern der Luftzylinder (16") gasdicht mit einer gemeinsamen äußeren Druckluftkammer (15.10; 15.10, 15.30, 21, 20) derart in Verbindung sind, dass die Innenkammern der Luftzylinder (16") und die gemeinsame Außenkammer (15.10; 15.10, 15.30, 21, 20) einen geschlossenen dichten pneumatischen Kreislauf (16", 15.10; 16", 15.10, 15.30, 21, 20) bilden, der ein Gas enthält, das mit gleichmäßigem Druck auf alle Kolben (16.1") der Luftzylinder (16") wirkt und damit die korrekte und gleichmäßige Spannung aller entsprechenden Sägedrähte sicherstellt.

11. Mehrdrahtsägemaschine nach Anspruch 10, **dadurch gekennzeichnet, dass** die gemeinsame äußere pneumatische Kammer (15.10) ein konstantes Volumen hat.

12. Mehrdrahtsägemaschine nach Anspruch 11, **dadurch gekennzeichnet, dass** die gemeinsame äußere pneumatische Kammer (15.10) mindestens eine Bohrung (15.10) in der Welle (15") umfasst.

13. Mehrdrahtsägemaschine nach Anspruch 12, **dadurch gekennzeichnet, dass** die Bohrung (15.10) in mindestens ein Ende der Welle (15") mündet, in der sie durch ein pneumatisches Dichtungselement geschlossen ist (15.3).

14. Mehrdrahtsägemaschine nach Anspruch 10, **dadurch gekennzeichnet, dass** die gemeinsame äußere pneumatische Kammer (15.10, 15.30, 21, 20) ein variables Volumen hat.

15. Mehrdrahtsägemaschine nach Anspruch 14, **dadurch gekennzeichnet, dass** die gemeinsame äußere pneumatische Kammer (15.10, 15.30, 21, 20) mindestens teilweise in einem zusätzlichen Luftzylinder (20) vorgesehen ist, in dem ein verschiebbarer Kolben (20.1) in seiner jeweiligen Position regulierbar ist zum Einstellen des Gasdrucks im dicht verschlossenen pneumatischen Kreislauf (16", 15.10, 15.30, 21, 20).

16. Mehrdrahtsägemaschine nach den Ansprüchen 10 und 15, **dadurch gekennzeichnet, dass** der dicht verschlossene pneumatische Kreislauf (16", 15.10, 15.30, 21, 20) die Innenkammern der Luftzylinder (16") in der Welle (15"), eine Bohrung (15.10) in der Welle (15"), die genannte Innenkammer des zusätzlichen Luftzylinders (20) umfasst.

17. Mehrdrahtsägemaschine nach den Ansprüchen 15 und/oder 16, **dadurch gekennzeichnet, dass** in der genannten Innenkammer des zusätzlichen Luftzylinders (20) ein Kolben (20.1) mit Stange (20.2) gleitet, einstellbar in seine jeweilige Position durch Steuermittel (23.1, 23.2, 24).

18. Mehrdrahtsägemaschine nach Anspruch 17, **dadurch gekennzeichnet, dass** die genannten Steuermittel ein mechanisches Hubelement mit Trapezgewinde (23.1, 23.2) umfassen, das hinsichtlich der Stange (20.2) des zusätzlichen Luftzylinders (20) kinematisch verbunden ist und durch einen Elektro-Getriebemotor (24) gesteuert wird.

19. Sägemaschine nach Anspruch 1, in der die Welle (15a) an jeder an ihr angebrachten Rolle (18a) eine jeweilige an ihrer Außenfläche offene Blindbohrung (15.2a) aufweist, **dadurch gekennzeichnet, dass** sie eine zylinderförmige Schraubenfeder (17) umfasst, die in der Blindbohrung (15.2a) koaxial gelagert und zwischen dem Boden der Bohrung (15.2a) und der Nabe (18.1a) der entsprechenden Rolle (18a) eingesetzt ist, sodass die Schraubenfeder (17) auf im wesentlichen konstante Weise die jeweilige Rolle (18a) elastisch belastet und dazu führt, sich bezüglich der Welle (15a) nach einer für die konstante und korrekte Spannung des teilweise über die Rolle gewickelten Sägedrahts nützlichen Richtung zu bewegen.

20. Sägemaschine nach Anspruch 1, in der die Nabe (18.1a') von jeder von der Welle (15a') getragenen Rolle (18a') eine im wesentliche schlitzförmige zentrale Montagebohrung (18.2a') mit zwei entgegengesetzten geraden Flanken (18.3a') aufweist, **dadurch gekennzeichnet, dass** die zwei entgegengesetzten geraden Flanken (18.3a') der Bohrung (18.2a') jeweils in Einschnitten (18.31a') vorgesehen sind und jeweils gegen entgegengesetzte ebene Flächen (15.31a') von Rippen (15.3a') der Welle (15a') verschiebbar nebeneinander angeordnet sind und dadurch, dass zwischen jeder Rippe (15.3a') der Welle (15a') und einem Ende des jeweiligen Einschnittes (18.31a') der Bohrung (18.2a') jeweils eine zylinderförmige Schraubenfeder (17') eingesetzt ist, die auf eine im wesentlichen konstante Weise die jeweilige Rolle (18a') elastisch belastet und dazu führt, sich bezüglich der Welle (15a') nach einer für die konstante und korrekte Spannung des teilweise über die Rolle gewickelten Sägedrahts nützlichen Richtung zu bewegen.

21. Sägemaschine nach Anspruch 19, **dadurch gekennzeichnet, dass** die ebenen Seiten (15.1a) der Welle (15a) im wesentlichen vertikal sind, während die Blindbohrungen (15.2a) der Welle (15a) im wesentlichen vertikale Achsen aufweisen.

22. Sägemaschine nach Anspruch 20, **dadurch gekennzeichnet, dass** die ebenen Seiten (15.31a') der Welle (15a') im wesentlichen vertikal sind, während die zylinderförmigen Schraubenfedern (17') jeweils im wesentlichen vertikale Achsen aufweisen.

## Revendications

1. Machine à scier pour scier des bloc de matériau, comprenant un organe flexible enroulé sur des poulies ; un dispositif de tension pour tendre ledit organe flexible ; où ledit dispositif de tension comprend un arbre (15, 15', 15", 15a, 15a') de support d'une ou plusieurs poulies (18, 18', 18", 18a, 18a'), sur chacune desquelles est partiellement enroulé un organe flexible respectif à fil de coupe, tandis que ledit arbre présente deux faces opposées planes (15.1, 15.1', 15.1", 15.1a, 15.31a') parallèles entre elles et le moyeu (18.1, 18.1', 18.1", 18.1a, 18.1a') de chaque poulie portée par l'arbre même présente un trou central de montage (18.2, 18.2', 18.2", 18.2a, 18.2a') substantiellement en forme de fente avec deux flancs opposés rectilignes et parallèles (18.3, 18.3', 18.3", 18.3a, 18.3a') juxtaposés à coulissement contre lesdits faces planes parallèles (15.1, 15.1', 15.1", 15.1a, 15.31a') de l'arbre, de sorte que ledit trou en fente (18.2, 18.2', 18.2", 18.2a, 18.2a') permet à ladite poulie (18, 18', 18", 18a, 18a') d'effectuer une course de translation par rapport à l'arbre (15, 15', 15", 15a, 15a'), tandis que sur le moyeu (18.1, 18.1', 18.1", 18.1a, 18.1a') de chaque poulie est monté un roulement correspondant (18.4, 18.4', 18.4", 18.4a, 18.4a'), qui supporte la poulie respective (18a, 18a') de manière librement rotative,
**caractérisée par le fait que**
ledit dispositif de tension comprend des moyens élastiques (16, 16', 16", 17, 17') intercalés entre ledit arbre de support (15, 15', 15", 15a, 15a') et ledit moyeu (18.1, 18.1', 18.1", 18.1a, 18.1a') de chaque poulie (18, 18', 18", 18a, 18a'), de sorte que leur force élastique détermine, de manière automatique et constante, un coulissement relatif dudit moyeu avec la poulie par rapport à l'arbre même, ledit coulissement étant guidé par accouplement coulissant entre lesdites faces planes (15.1, 15,1', 15.1", 15.1a, 15.31a') de l'arbre (15, 15', 15", 15a, 15a') et les flancs rectilignes (18.3, 18.3', 18.3", 18.3a, 18.3a') dudit trou (18.2, 18.2', 18.2", 18.2a, 18.2a') du moyeu (18.1, 18.1', 18.1", 18.1a, 18.1a') et étant arrêté lorsque la réaction appliquée par le fil de coupe relatif partiellement enroulé sur ladite poulie (18, 18', 18", 18a, 18a') est égal à la force élastique desdits moyens élastiques (16, 16', 16", 17, 17') agissant sur ledit moyeu (18.1, 18.1', 18.1", 18.1a, 18.1a'), réalisant ainsi la tension individuelle correcte de chaque fil de coupe.

2. Machine à scier selon la revendication 1, **caractérisée par le fait qu'**elle comprend des moyens élastique à cylindre à ressort à gaz (16, 16') intercalés dans ledit trou de montage (18.2, 18.2') de chaque poulie (18, 18'), entre ledit arbre de support (15, 15') et ledit moyeu (18.1, 18.1') de chaque poulie (18, 18'), de sorte que leur force élastique détermine, de manière automatique et constante, un coulissement relatif du moyeu (18.1, 18.1') avec poulie (18, 18') par rapport à l'arbre (15, 15'), ledit coulissement étant arrêté lorsque la réaction appliquée par le fil de coupe respectif partiellement enroulé sur ladite poulie (18, 18') est égal à la force élastique desdits moyens élastique (16, 16') agissant sur ledit moyeu (18.1, 18.1'), réalisant ainsi la tension correcte individuelle de chaque fil de coupe.

3. Machine à scier selon la revendication 2, **caractérisée par le fait que** ledit cylindre à ressort à gaz (16, 16') est chargé avec de l'azote gazeux sous pression.

4. Machine à scier selon la revendication 2 et/ou 3, où ledit arbre (15) présente, au niveau de chaque poulie (18) montée sur celui-ci, un trou respectif (15.2), ouvert sur la surface externe de l'arbre, **caractérisée par le fait qu'**un cylindre correspondant à ressort à gaz (16) est logé de manière stable dans chaque trou (15.2) et présente une tige (16.1) au moins partiellement étendu au-delà dudit trou (15.2) et placé en contact avec la surface opposée du trou de montage (18.2) d'une poulie respective (18), de sorte que ledit cylindre à ressort à gaz (16) sollicite élastiquement, de manière substantiellement constante, la poulie correspondante (18) pour qu'elle effectue une translation par rapport à l'arbre (15) selon une direction utile pour la tension constante et correcte du fil de coupe enroulé partiellement sur la poulie même.

5. Machine à scier selon la revendication 4, où ledit arbre (15) présente deux faces opposées planes (15.1), parallèles entre elles, tandis que le moyeu (18.1) de chaque poulie (18) portée par l'arbre présente un trou central de montage (18.2) substantiellement en forme de fente, avec deux flancs opposés rectilignes et parallèles (18.3) juxtaposés en coulissement contre lesdites faces planes parallèles (15.1) de l'arbre (15), **caractérisée par le fait que** le coulissement relatif du moyeu (18.1) avec poulie (18) par rapport à l'arbre (15) est guidé par accouplement coulissant entre lesdites faces planes (15.1) de l'arbre (15) et les flancs rectilignes (18.3) dudit trou (18.2) du moyeu (18).

6. Machine à scier selon la revendication 2 et/ou 3, **caractérisée par le fait que** ledit arbre (15') présente une paire de consoles (15.3') placées sur des parties opposées de l'arbre, et **par le fait qu'**entre chaque console (15.3') de l'arbre (15') et la surface interne opposée du trou de montage (18.2') de chaque poulie (18') est intercalé un cylindre respective à ressort à gaz (16').

7. Machine à scier selon la revendication 6, où ledit arbre (15') présente deux faces opposées planes (15.1'), parallèles entre elles, tandis que le moyeu (18.1') de chaque poulie (18') portée par l'arbre présente un trou central de montage (18.2') substantiellement en forme de fente avec deux flancs opposés rectilignes et parallèles (18.3'), **caractérisée par le fait que** le corps de chaque cylindre à ressort à gaz (16') est appuyé ou fixé de manière stable sur une console (15.3') et/ou contre une face plane correspondante (15.1') de l'arbre (15'), tandis qu'il appui, de manière coulissante, contre un flanc rectiligne (18.3') d'un trou de montage (18.2') d'une poulie respective (18'), de sorte que le coulissement relatif du moyeu (18.1') avec poulie (18') par rapport à l'arbre (15') est guidé par accouplement coulissant entre lesdites parties.

8. Machine à scier selon la revendication 6 et/ou 7, où ledit moyeu (18.1') de chaque poulie (18') portée par l'arbre présente un trou central de montage (18.2') substantiellement en forme de fente avec deux flancs opposés rectilignes et parallèles (18.3'), **caractérisée par le fait que** lesdites consoles (15.3') présentent des surfaces respectives planes d'extrérnité (15.31') juxtaposées en coulissement contre les flancs opposés (18.3') dudit trou de montage (18.2'), de sorte que le coulissement relatif du moyeu (18.1') avec poulie (18') par rapport à l'arbre (15') est guidé par accouplement coulissant entre lesdites parties.

9. Machine à scier selon une ou plusieurs des revendications précédentes, **caractérisée par le fait que** lesdites faces planes (15.1, 15.1') de l'arbre (15, 15') sont essentiellement verticales, tandis que lesdits cylindres à ressort à gaz (16, 16') présentent leurs axes respectifs substantiellement verticaux.

10. Machine à scier multifils pour scier des blocs de matériau :
- comprenant des organes flexibles enroulés sur poulies ; des dispositifs de tension individuelle pour tendre lesdits organes flexibles ; où lesdits dispositifs de tension individuelle comprennent un arbre (15") de support d'une pluralité de poulies conduites (18"), sur chacune desquelles est au moins partiellement enroulé un organe flexible respectif à fil de coupe, tandis que le moyeu (18.1") de chaque poulie (18") portée par l'arbre présente un trou central de montage (18.2"), lequel permet à ladite poulie (18") d'effectuer une course de translation guidée par rapport à l'arbre (15") ; sur ledit moyeu (18.1") étant monté un roulement correspondant (18.4"), qui supporte la poulie respective (18") de manière librement rotative,
- et où ledit arbre (15") présente, pour chaque poulie (18") montée sur celui-ci, un trou respectif transversal (15.2"), borgne, ouvert sur la surface externe de l'arbre même et dans lequel un cylindre pneumatique correspondant (16") est logé de manière stable et présente une chambre interne où coulisse de manière étanche un piston respectif (16.1") avec tige (16.2"), poussé pour s'étendre partiellement au-delà dudit trou (15.2") et placé en contact avec la surface opposée du trou de montage (18.2") du moyeu (18.1") de la poulie correspondante (18"), de sorte que ledit cylindre pneumatique (16") sollicite la poulie correspondante (18") pour qu'elle effectue une translation par rapport à l'arbre (15") selon une direction utile pour la tension correcte du fil de coupe enroulé au moins partiellement sur la poulie, réalisant la tension correcte individuelle de chaque fil de coupe, **caractérisée par le fait que** les chambres internes desdits cylindres pneumatiques (16") communiquent de manière étanche au gaz avec une chambre pneumatique externe commune (15.10; 15.10, 15.30, 21, 20), de sorte que lesdites chambres internes des cylindres pneumatiques (16") et ladite chambre externe commune (15.10; 15.10, 15.30, 21, 20) forment un circuit pneumatique fermé étanche (16", 15.10; 16", 15.10, 15.30, 21, 20) et contenant un gaz qui agit par pression uniforme sur tous lesdits pistons (16.1") desdits cylindres pneumatiques (16"), en assurant la tension correcte et uniforme de tous les fils de coupe correspondants.

11. Machine à scier multifils selon la revendication 10, **caractérisée par le fait que** ladite chambre pneumatique externe commune (15.10) présente un volume constant.

12. Machine à scier multifils selon la revendication 11, **caractérisée par le fait que** ladite chambre pneumatique externe commune (15.10) comprend au moins un trou (15.10) dans ledit arbre (15").

13. Machine à scier multifils selon la revendication 12, **caractérisée par le fait que** ledit trou (15.10) débouche au moins à une extrémité dudit arbre (15"), où il est fermé à l'aide d'un organe d'étanchéité pneumatique (15.3).

14. Machine à scier multifils selon la revendication 10, **caractérisée par le fait que** ladite chambre pneumatique externe commune (15.10, 15.30, 21, 20) présente un volume variable.

15. Machine à scier multifils selon la revendication 14, **caractérisée par le fait que** ladite chambre pneumatique externe commune (15.10, 15.30, 21, 20) est pourvue, au moins en partie, dans un cylindre pneumatique supplémentaire (20), dans lequel un piston coulissant (20.1) peut être réglé dans sa position relative pour la régulation de la pression du gaz régnant dans ledit circuit pneumatique fermé étanche (16", 15.10, 15.30, 21, 20).

16. Machine à scier multifils selon les revendications 10 et 15, **caractérisée par le fait que** ledit circuit pneumatique fermé étanche (16", 15.10, 15.30, 21, 20) comprend les chambres internes desdits cylindres pneumatiques (16") dans ledit arbre (15"), un trou (15.10) dans ledit arbre (15"), ladite chambre interne dudit cylindre pneumatique supplémentaire (20).

17. Machine à scier multifils selon les revendications 15 et/ou 16, **caractérisée par le fait que** dans ladite chambre interne dudit cylindre pneumatique supplémentaire (20) coulisse un piston (20.1) avec tige (20.2) réglable dans sa position relative à l'aide de moyens de commande (23.1, 23.2, 24).

18. Machine à scier multifils selon la revendication 17, **caractérisée par le fait que** lesdites moyens de commande comprennent un vérin mécanique à vis trapézoïdale (23.1, 23.2) raccordé cinématiquement par rapport à la tige (20.2) dudit cylindre pneumatique supplémentaire (20) et commandé à l'aide d'un motoréducteur électrique (24).

19. Machine à scier selon la revendication 1, où ledit arbre (15a) présente, pour chaque poulie (18a) montée sur celui-ci, un trou borgne respectif (15.2a), ouvert sur sa surface externe, **caractérisée par le fait qu'**elle comprend un ressort hélicoïdal cylindrique (17) logé de manière coaxiale dans ledit trou borgne (15.2a) et intercalé entre le fond dudit trou (15.2a) et le moyeu (18.1a) de la poulie correspondante (18a), de sorte que ledit ressort (17) sollicite élastiquement, de manière substantiellement constante, la poulie correspondante (18a) pour qu'elle effectue une translation par rapport à l'arbre (15a) selon une direction utile pour la tension constante et correcte du fil de coupe partiellement enroulé sur la poulie même.

20. Machine à scier selon la revendication 1, où le moyeu (18.1a') de chaque poulie (18a') portée par l'arbre (15a') présente un trou central de montage (18.2a') substantiellement en forme de fente avec deux flancs opposés rectilignes (18.3a'), **caractérisée par le fait que** lesdits deux flancs rectilignes (18.3a') dudit trou (18.2a') sont prévus dans des renfoncements respectifs (18.31a') et sont juxtaposés en coulissement contre des surfaces respectives planes opposées (15.31a') d'ailettes (15.3a') dudit arbre (15a'), et **par le fait qu'**entre chaque ailette (15.3a') dudit arbre (15a') et une extrémité du renfoncement respectif (18.31a') dudit trou (18.2a') est intercalé un ressort hélicoïdal cylindrique respectif (17'), qui sollicite élastiquement, de manière substantiellement constante, la poulie correspondante (18a') pour qu'elle effectue une translation par rapport audit arbre (15a') selon une direction utile pour la tension constante et correcte du fil de coupe enroulé partiellement sur la poulie même.

21. Machine à scier selon la revendication 19, **caractérisée par le fait que** lesdites faces planes (15.1a) de l'arbre (15a) sont essentiellement verticales, tandis que lesdits trous borgnes (15.2a) dudit arbre (15a) possèdent leurs axes respectifs substantiellement verticaux.

22. Machine à scier selon la revendication 20, **caractérisée par le fait que** lesdites faces planes (15.31a') de l'arbre 15a') sont essentiellement verticales, tandis que lesdits ressorts hélicoïdaux cylindriques (17') présentent leurs axes respectifs substantiellement verticaux.
